(19) Europäisches Patentamt
European Patent Office
Office européen des brevets

(11) **EP 1 337 110 A1**

(12) **DEMANDE DE BREVET EUROPEEN**

(43) Date de publication:
**20.08.2003 Bulletin 2003/34**

(51) Int Cl.$^7$: **H04N 7/173**

(21) Numéro de dépôt: **03290268.6**

(22) Date de dépôt: **04.02.2003**

(84) Etats contractants désignés:
**AT BE BG CH CY CZ DE DK EE ES FI FR GB GR HU IE IT LI LU MC NL PT SE SI SK TR**
Etats d'extension désignés:
**AL LT LV MK RO**

(30) Priorité: **18.02.2002 FR 0202015**

(71) Demandeur: **ALCATEL**
**75008 Paris (FR)**

(72) Inventeur: **Farineau, Jean**
**92300 Levallois Perret (FR)**

(74) Mandataire: **Smith, Bradford Lee et al**
**Compagnie Financière Alcatel,**
**Département de Propriété Industrielle,**
**5, rue Noel Pons**
**92734 Nanterre Cedex (FR)**

(54) **Récepteur sélectif d'éléments d'information**

(57) L'invention est relative à un récepteur destiné à recevoir et à présenter de façon sélective des éléments d'information diffusés de manière telle qu'à chaque élément d'information diffusé soient affectés, d'une part, un vecteur représentant la catégorie d'information à laquelle appartient l'élément d'information et, d'autre part, un facteur représentant la pertinence (p) de cet élément dans la catégorie. Ce récepteur comporte un moyen de filtrage (12) sélectionnant les éléments d'information à présenter par le récepteur en fonction d'un profil de degrés d'intérêt par catégorie, le facteur de pertinence étant utilisé pour pondérer le degré d'intérêt de l'élément d'information.

Le récepteur comporte un moyen (40$_{ij}$) de modulation du facteur de pertinence affecté à au moins certaines catégories d'information. De préférence, ce moyen de modulation du facteur de pertinence comprend un moyen (18) pour effectuer cette modulation en fonction des données relatives aux consultations antérieures d'éléments d'information de la même catégorie.

FIG.3

EP 1 337 110 A1

**Description**

L'invention est relative à un récepteur sélectif d'éléments d'information.

Elle concerne plus particulièrement un récepteur du type de celui décrit dans le brevet français n° 2809557.

Le récepteur décrit dans ce brevet antérieur a pour but de permettre à l'usager d'enregistrer sur son récepteur des informations qui l'intéressent sans avoir à effectuer de programmation préalable du récepteur.

En effet, la programmation des enregistrements avec un récepteur, par exemple avec un magnétoscope, constitue une opération malaisée à mettre en oeuvre.

A cet effet, selon le brevet antérieur, préalablement à la diffusion, du côté de l'émetteur, on classe les éléments d'informations dans diverses catégories, par exemple en arborescence ; on affecte à chaque élément d'information un descripteur caractérisant la classe à laquelle appartient cet élément, et on attribue à chaque élément d'information un facteur de pertinence qui représente l'intérêt que l'élément d'information peut présenter pour les utilisateurs s'intéressant à la classe, branche ou catégorie à laquelle appartient l'élément d'information.

Dans le récepteur, chaque élément d'information à enregistrer et présenter est sélectionné en fonction d'un potentiel d'intérêt de cet élément d'information qui est défini par un profil d'utilisateur dans ce récepteur. Ainsi à chaque catégorie d'élément d'information est affecté un degré d'intérêt.

Il n'est pas indispensable d'introduire, à priori, en mémoire du récepteur les pôles d'intérêt de l'utilisateur car ces pôles peuvent être déterminés par un apprentissage statistique.

Ainsi, dans un exemple, le récepteur comporte une touche permettant de passer à un autre élément d'information, une touche de demande de détails supplémentaires (dans le cas où les éléments d'information sont classés par niveaux de détails) et une touche d'enregistrement et le récepteur est alors programmé pour déterminer le degré d'intérêt de chaque catégorie en fonction, par exemple, du temps passé par l'utilisateur à consulter un élément d'information de la catégorie. De façon plus générale, toute consultation d'un élément d'information accroît le degré d'intérêt attaché à la catégorie à laquelle appartient cet élément et tout rejet ou consultation significativement abrégée d'un élément d'information diminue son degré d'intérêt.

Le récepteur est bien entendu adapté à la nature de l'information qu'il est destiné à recevoir. Il peut donc s'agir d'un ordinateur, d'un récepteur radiophonique, d'un récepteur de télévision, d'un récepteur téléphonique, d'un assistant personnel, d'un livre électronique.

Comme également décrit dans le brevet antérieur n°2809557, étant donné que toutes les informations qui intéressent l'utilisateur du récepteur peuvent être stockées dans une mémoire, la diffusion peut être effectuée à un moment indépendant de la consultation du récepteur, par exemple pendant les heures creuses telles que les heures de nuit, ce qui permet, dans un système de télécommunication, de répartir la charge du réseau de transmission.

Dans un tel procédé de diffusion d'éléments d'information il est important que le facteur de pertinence attribué par le diffuseur à chaque élément d'information corresponde à l'intérêt qu'il peut susciter chez les utilisateurs. C'est pourquoi, comme décrit dans le brevet antérieur, la consultation des émissions localement stockées par l'utilisateur confirme son intérêt pour ces émissions et valide la pertinence de la classification opérée par les unités de production d'informations. Cette confirmation de l'intérêt porté aux émissions peut être retournée vers le diffuseur pour la mise à jour d'une note de pertinence des classifications attribuées par les unités de production de ce diffuseur; s'il s'avère que les classifications proposées par une unité de production sont confirmées par les utilisateurs, la note de pertinence des classifications attribuées par cette unité de production pourra être accrue. Plus globalement, la note moyenne de pertinence de l'ensemble des émissions proposées par la société de diffusion pourra constituer un critère de qualité de ces unités de production et donc un critère de fiabilité pour les utilisateurs potentiels.

L'invention résulte de la constatation que la note de pertinence établie par le diffuseur ou la société de production est basée sur un processus subjectif, qui peut introduire des aléas de fonctionnement du dispositif de filtrage, notamment en présence de notes de pertinence systématiquement trop élevées, en provoquant la sélection inopportune de contenus ne présentant qu'un intérêt médiocre au détriment de contenus dont la pertinence est évaluée de manière plus modérée.

Le dispositif selon l'invention, introduit une correction locale au niveau du terminal d'accès, modérant de manière automatique les notes de pertinence pour cette catégorie particulière, pour la source de contenu considérée, afin de corriger les excès de cotation. Le dispositif selon l'invention peut aussi fournir une indication à la source de contenu (diffuseur ou société de production) afin de l'amener à modérer ses notations pour la catégorie de contenu concernée. Il peut aussi permettre la publication d'un relevé global et une synthèse des corrections opérées de manière locale au niveau de chaque terminal d'accès, afin de renseigner les utilisateurs sur la qualité de cotation établie par chaque source de contenu.

Pour établir la correction locale sur les notes de pertinence relatives aux catégories concernées, le récepteur selon l'invention comporte, au moins pour certaines catégories d'informations, un moyen pour modifier le facteur de pertinence attribué par le diffuseur, en fonction de l'intérêt ou du désintérêt que manifeste l'utilisateur pour chacune de ces catégories, un moyen étant prévu pour mesurer cet intérêt et ce désintérêt à partir du mode d'actionnement du récepteur.

Par exemple, dans un mode de réalisation le récepteur est agencé pour diminuer le facteur de pertinence attribué à des éléments d'information non consultés ou peu consultés alors que le facteur de pertinence (fourni par le diffuseur) est de valeur élevée et que le degré d'intérêt de l'utilisateur est également élevé, ce degré étant déterminé de façon automatique par l'utilisation antérieure du récepteur.

Pour déterminer qu'un élément d'information n'est pas consulté, ou est peu consulté, on prévoit un moyen permettant de mesurer le temps qui sépare l'apparition de l'élément d'information de l'actionnement d'une touche (ou analogue) de passage à la consultation d'un autre élément d'information ou d'arrêt du récepteur. Par exemple, si ce temps est en général inférieur à 2 secondes, ceci signifie que l'utilisateur manifeste un désintérêt pour les éléments d'information fournis, rattachés à la catégorie concernée.

Le facteur de pertinence peut être augmenté si l'utilisateur manifeste un intérêt marqué pour la catégorie considérée. Par exemple si les éléments d'information sont classés en degrés de détails et si, de façon répétée pour la catégorie, l'utilisateur demande des détails supplémentaires, alors le facteur de pertinence affecté à cette catégorie sera augmenté dans le récepteur. De même, le facteur de pertinence peut être augmenté quand, de façon répétée, l'utilisateur effectue un enregistrement pour archivage de l'élément d'information dans cette catégorie. Dans ce cas, le récepteur est, par exemple, programmé pour mesurer le nombre d'actionnements de la touche de demande de détails supplémentaires et/ou de la touche d'enregistrement et pour augmenter le facteur de pertinence affecté à la catégorie en fonction de ce nombre.

Pour ces mesures il suffit de prévoir pour chacune des catégories dont le facteur de pertinence est modifiable dans le récepteur, un accumulateur comprenant une mémoire ou un espace mémoire. De préférence ce sont les classes de niveau le plus élevé dont le facteur de pertinence est modifiable.

Ainsi, l'invention concerne de façon générale un récepteur destiné à recevoir et à présenter de façon sélective des éléments d'information diffusés de manière telle qu'à chaque élément d'information diffusé soient affectés, d'une part, un vecteur représentant la catégorie d'information à laquelle appartient l'élément d'information et, d'autre part, un facteur représentant la pertinence (p) de cet élément dans la catégorie, ce récepteur comportant un moyen de filtrage sélectionnant les éléments d'information à présenter par le récepteur en fonction d'un profil de degrés d'intérêt par catégorie, le facteur de pertinence étant utilisé pour pondérer le degré d'intérêt de l'élément d'information, ce récepteur étant caractérisé en ce qu'il comporte un moyen de modulation du facteur de pertinence affecté à au moins certaines catégories d'information.

De préférence, le moyen de modulation du facteur de pertinence comprend un moyen pour effectuer cette modulation en fonction des données relatives aux consultations antérieures d'éléments d'information de la même catégorie. Dans ce cas, selon une réalisation, le moyen de modulation du facteur de pertinence est tel que ce facteur est diminué à chaque fois qu'un élément d'information pour la catégorie concernée n'est pas consulté ou consulté de façon partielle. Par exemple, le facteur de diminution est d'autant plus élevé que le facteur de pertinence et/ou le degré d'intérêt est élevé.

Dans une réalisation, on prévoit un interface utilisateur comportant une touche d'échappement à la présentation d'un élément d'information et un moyen pour effectuer la diminution du facteur de pertinence en fonction de l'actionnement de la touche d'échappement.

Selon une réalisation, le moyen de modulation du facteur de pertinence est tel que ce facteur est augmenté quand l'élément d'information appartenant à la catégorie concernée par ce facteur de pertinence est mis en mémoire.

Dans un mode de réalisation, pour lequel les éléments d'information sont affectés d'un niveau de détail, les moyens de modulation sont tels que le facteur de pertinence est augmenté quand l'utilisateur demande un niveau de détail plus élevé pour l'élément d'information consulté dans la catégorie concernée.

De préférence, les informations sont classées selon des catégories en arborescence allant du général au particulier, et le récepteur comporte un moyen de modulation du facteur de pertinence seulement pour la (les) catégorie(s) de niveau(x) le(s) plus élevé(s).

Dans une réalisation, le récepteur comporte un moyen pour émettre, vers une station centrale, le coefficient de modulation du facteur de pertinence pour la catégorie concernée par ce facteur de pertinence.

L'invention concerne aussi l'application du récepteur défini ci-dessus à la réception d'information appartenant au groupe comportant : les informations sonores et enregistrements musicaux, les informations et programmes vidéos, les textes, les programmes, les fichiers, les données d'information, les messages diffusés sur les réseaux, les images fixes ou séquences d'images animées, les pages diffusées sur un réseau de type Internet, les catalogues, les informations commerciales, les bulletins, les applications logicielles diffusées, les jeux diffusés.

D'autres caractéristiques et avantages de l'invention apparaîtront avec la description de certains de ses modes de réalisation, celle-ci étant effectuée en se référant aux dessins ci-annexés sur lesquels :

la figure 1 représente un récepteur connu,
la figure 2 montre un interface utilisateur pour le dispositif de la figure 1, et
les figures 3 et 4 sont des schémas de parties d'un récepteur conforme à l'invention.

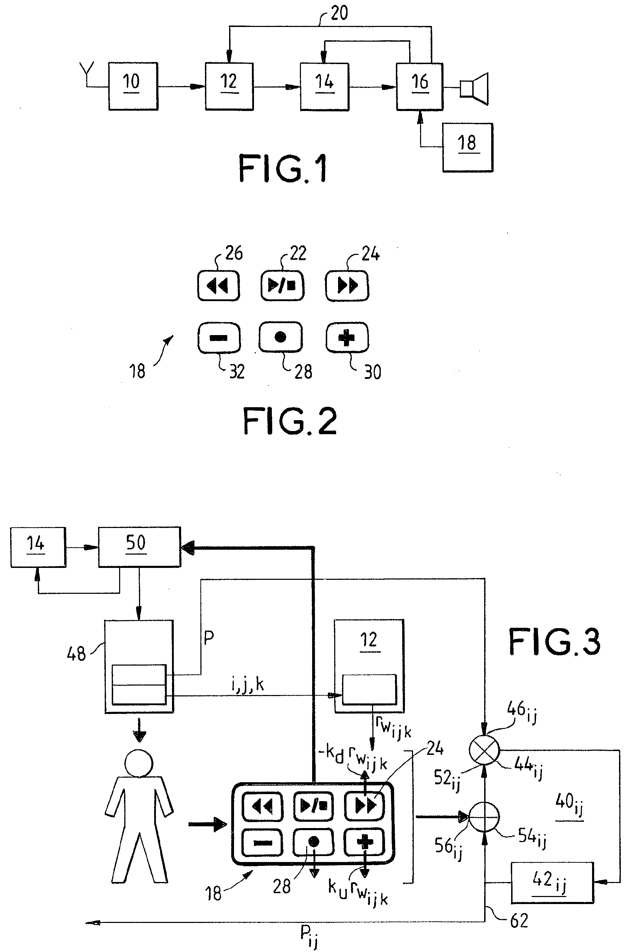

La figure 1 représente un dispositif de réception, ou récepteur, de données diffusées conformément au procédé décrit dans le brevet français n°2809557. Dans l'exemple on considérera que les données sont de type radiophonique.

Ce dispositif comporte un organe de réception 10 tel qu'un récepteur radiophonique délivrant des informations à un organe de filtrage 12 destiné à retenir seulement les éléments d'information qui correspondent au profil de l'utilisateur. Les éléments d'information ainsi filtrés sont introduits dans une mémoire 14, ou cache, de type quelconque tel qu'une mémoire à semi-conducteur ou une mémoire de type disque magnétique. Les données mémorisées sont accessibles par un organe de présentation 16 actionnable par un interface utilisateur 18 comprenant, dans l'exemple, six touches comme décrit ci-après.

L'organe de présentation 16 permet aussi l'écoute des émissions enregistrées dans la mémoire selon la sélection effectuée par l'interface 18.

L'organe de filtrage 12 reçoit des informations (connexion 20) de l'organe de présentation 16 afin d'adapter le filtrage aux pôles d'intérêt de l'utilisateur qui s'expriment par l'actionnement des touches de l'interface 18.

Comme décrit dans le brevet antérieur, l'interface 18 comporte six touches: à savoir, tout d'abord une touche 22 de marche/arrêt et une touche 24 dont l'actionnement permet de passer de la présentation d'un élément d'information en cours à l'élément d'information suivant selon le classement déterminé par l'organe de filtrage 12. Ensuite une touche 26 a pour but de reprendre la présentation d'éléments d'information précédents (au sens du classement défini par l'organe de filtrage 12). Une touche 28 d'enregistrement permet d'archiver un élément d'information, par exemple en réservant une zone de la mémoire 14 à l'archivage, les autres éléments d'information étant destinés à être effacés de la mémoire 14 après un temps déterminé ou après consultation.

Une touche (+)30 permet d'accéder à un niveau de détail plus élevé quand les informations sont classées par niveaux de détails. Enfin, une touche (-)32 est prévue pour accéder à un niveau de présentation plus synthétique. Pour une émission radiophonique un niveau de détail inférieur correspond à un temps de présentation sensiblement moins important par sujet ou thème d'information.

Pour mieux comprendre le perfectionnement apporté au récepteur selon la présente invention, il convient de rappeler ici la segmentation des informations telle que décrite dans le brevet antérieur.

Les informations sont segmentées selon trois niveaux de détail. Dans le cadre d'une diffusion radiophonique, le niveau de détail 1 correspond à une information courte, ou "flash", de durée de l'ordre de quelques dizaines de secondes, le niveau 2 est un élément d'information d'une durée de quelques minutes, et le niveau 3 correspond à des émissions consacrées à un thème dont la durée est, par exemple, d'au moins 15 minutes.

Par ailleurs, les informations sont classées selon une arborescence, c'est-à-dire depuis des classes (ou catégories) d'ordre général vers des classes d'ordre plus particulier.

Par exemple pour les émissions radiophoniques les catégories d'ordre général sont l'actualité, le sport, la culture, la bourse. Chacune de ces catégories générales se divise en plusieurs branches comprenant, par exemple pour l'actualité : la politique, l'économie.... Chacune de ces branches est elle-même divisée en plusieurs branches de second niveau. Par exemple la politique peut être divisée en politique nationale et politique internationale. Enfin dans cet exemple, les branches de second niveau peuvent également être divisées en des branches de troisième niveau. Ainsi la politique nationale peut être divisée en faits divers, environnement, parlement....

Ainsi chaque élément d'information peut être représenté par un vecteur qui indique le rang de l'élément d'information dans chaque niveau de branche.

Par exemple, un élément d'actualité d'environnement de type national peut être représenté par le vecteur (2,5,4,9) dans lequel la composante 2 représente la classe (ou catégorie) d'actualité, la composante 5 représente la politique qui est le rang de la politique dans les branches de premier niveau, 4 représente le rang des actualités de politique nationale dans les branches de second niveau et 9 le rang des actualités de politique nationale relatives à l'environnement dans les branches de troisième niveau.

On comprend aussi qu'un élément d'information peut être classé dans d'autres rubriques et peut donc être affecté d'un autre vecteur par exemple (2,6,2).

Ainsi à chaque élément d'information on affecte un (ou plusieurs) vecteur(s) représentant sa situation dans l'arborescence de classement des informations. En outre, à chaque élément d'information, on affecte aussi un facteur de pertinence, par exemple de valeur comprise entre 0,1 et 10. Ce facteur quantifie l'intérêt conçu par le diffuseur de l'élément d'information pour la population s'intéressant à la branche considérée. Ainsi le facteur de pertinence pour le même élément d'information affecté de plusieurs vecteurs peut être différent d'un vecteur à un autre.

Chaque élément d'information est ainsi transmis avec un descripteur qui comprend, dans l'exemple, outre les vecteurs mentionnés ci-dessus et les facteurs de pertinence, pour chaque vecteur, un identifiant de l'élément d'information, une durée d'écoute (quand il s'agit d'informations de type radiophonique), une taille (en nombre d'octets) d'occupation de la mémoire du récepteur, le niveau de détail (de 1 à 3), la date et l'heure de production de l'élément d'information, sa durée de vie (c'est-à-dire le temps au bout duquel l'élément peut être effacé de la mémoire), un seuil d'introduction et un seuil d'acquisition.

Par "seuil d'introduction" on entend le temps minimum estimé pour que l'utilisateur se rende compte du sujet de l'élément d'information. Ce temps est par exemple d'une seconde. Dans le récepteur, ce seuil d'introduction est utilisé pour la mise à jour du profil mémorisé par l'organe de filtrage 12. Une action sur la touche 24 d'échappement ne sera considérée comme significative que si elle est effectuée pendant le temps compris entre le seuil d'introduction (suivant le début de la présentation de l'élément d'information) et une valeur limite relativement proche du seuil. Par exemple si le seuil d'introduction est d'une seconde on considérera que l'utilisateur manifeste son désintérêt s'il actionne la touche d'échappement 24 entre 1 et 3 secondes après le début de présentation de cet élément.

Par "seuil d'acquisition" on entend la durée minimale de consultation de l'élément d'information pour laquelle on peut considérer que l'utilisateur a acquis l'essentiel de cet élément. Par exemple pour un élément d'information d'une durée de 30 secondes, on peut estimer qu'une consultation de 15 secondes correspond à ce critère. Dans ce cas le récepteur est programmé pour considérer que cet élément d'information présente de l'intérêt pour l'utilisateur et mettre à jour l'organe de filtrage 12.

Si le récepteur peut être utilisé pour d'autres données que des données audio, la durée de présentation de l'élément d'information varie selon la nature de l'information. Par exemple, pour un texte, cette durée correspondra à un temps estimé de lecture.

Comme décrit dans le brevet antérieur, dans le récepteur le degré d'intérêt affecté à chaque classe et à chaque branche, c'est-à-dire à chaque vecteur, est fonction non seulement de la durée de consultation de chaque élément d'information mais aussi, du nombre de consultations.

Il convient de noter ici qu'il convient de distinguer le facteur de pertinence, qui est affecté par le diffuseur à chaque élément d'information, du degré d'intérêt présenté par une catégorie d'information, l'ensemble des degrés d'intérêt constituant le profil d'utilisateur, stocké par l'organe de filtrage 12. En effet, le facteur de pertinence généré par le diffuseur concerne un élément d'information individuel, alors que le degré d'intérêt concerne une catégorie au sein de l'arborescence constituant le profil utilisateur, cette arborescence étant identique à l'arborescence de classification des informations.

Selon un aspect important de l'invention qui va être décrit en relation avec la figure 3 on associe à chaque branche de niveau élevé de la classification de l'information un accumulateur $40_{ij}$ qui comporte un registre $42_{ij}$ constituant, par exemple, un espace mémoire réservé et qui est destiné à fournir une valeur numérique constituant un coefficient de modulation du facteur de pertinence affecté par le diffuseur à chaque élément d'information. Ce coefficient dépend de l'intérêt porté par l'utilisateur du récepteur à la catégorie à laquelle appartient l'élément d'information concerné. Ainsi le coefficient de modulation du facteur de pertinence peut être déterminé d'une manière analogue à la manière dont est déterminé le degré d'intérêt dans chaque catégorie, c'est-à-dire le profil en mémoire de l'organ de filtrage 12.

L'accumulateur $40_{ij}$ comporte aussi un multiplicateur $44_{ij}$ présentant une première entrée $46_{ij}$ recevant le facteur de pertinence p fourni par l'élément 48 présenté par l'organe de présentation 50. La seconde entrée $52_{ij}$ du multiplicateur $44_{ij}$ reçoit le signal de sortie d'un additionneur $54_{ij}$ dont la première entrée est reliée à la sortie du registre $42_{ij}$ et dont la seconde entrée $56_{ij}$ reçoit un incrément fonction de l'actionnement des touches de l'organe d'interface 18.

Le coefficient de modulation du facteur de pertinence qui est mémorisé dans le registre 42 est déterminé de la manière suivante :

A chaque élément 48 présenté à l'utilisateur est affecté un vecteur ou pointeur noté i,j,k qui, rappelons-le, détermine la position de cet élément au sein de l'arborescence de classification, ainsi qu'un facteur de pertinence p de cet élément.

Le vecteur i,j,k est appliqué à l'entrée de l'organe de filtrage 12 contenant le profil d'utilisateur. A ce vecteur est affecté un degré d'intérêt, ou poids relatif, de la classe i,j,k de l'élément d'information par rapport à toutes les autres classes. Ce degré d'intérêt (ou poids relatif) est noté $rw_{ijk}$.

Le facteur de pertinence p est appliqué, rappelons-le, sur l'entrée $46_{ij}$.

Si l'utilisateur appuie sur la touche 24 de l'interface 18 pour accéder à un élément suivant l'élément en cours d'accès, une correction négative de pertinence est établie avec la valeur : $-k_d.rw_{ijk}$. Le coefficient $k_d$ permet de contrôler la rapidité de décroissance de la correction de pertinence. $k_d$ est un facteur fixe, ou établi de manière inversement proportionnelle au temps écoulé depuis le début de la présentation de l'élément, dans la mesure où un appui prématuré sur la touche 24 signifie un désintérêt marqué pour le sujet traité.

Si, à l'inverse, l'utilisateur actionne la touche 28 de mise en mémoire ou 30 de demande de détails supplémentaires au cours de l'accès à l'élément considéré, une correction positive de pertinence est effectuée avec la valeur $k_u.rw_{ijk}$. $k_u$ est un facteur permettant de contrôler la rapidité de croissance de la correction de pertinence ; $k_u$ est un facteur fixe, indépendant de l'instant d'appui sur la touche considérée.

Chaque actionnement d'une touche 24, 28, 30 fournit ainsi un incrément positif ou négatif appliqué sur l'entrée $56_{ij}$ qui est multiplié, grâce au multiplicateur $44_{ij}$, par le facteur de pertinence p, afin de pondérer la correction par la pertinence établie par le diffuseur : plus l'erreur d'appréciation a pu être importante de la part du diffuseur, plus la correction est significative.

Le résultat de la multiplication, soit $-p.k_d rw_{ijk}$ ou $+p.k_u rw_{ijk}$, est accumulé dans le registre $42_{ij}$.

Pour simplifier la réalisation, les registres sont seulement affectés aux deux premiers niveaux de l'arborescence. On prévoit ainsi un registre par catégorie de niveau 1 et un registre par catégorie de niveau 2. Ainsi une catégorie de niveau 3, ou plus, dans l'arborescence est associée à la catégorie de niveau plus élevé, c'est-à-dire le niveau 2 à laquelle elle se rattache. Par exemple, un élément classé (5,1,2,1,5) est accumulé dans la classe (5,1,2).

Dans l'exemple indiqué ci-dessus:

$$P_{ij}[n]=P_{ij}[n-1]-p.k_d.rw_{ijk}, \text{ ou}$$

$$P_{ij}[n]=P_{ij}[n-1]+p.k_u.rw_{ijk}.$$

En variante, on peut utiliser des registres pour chaque niveau d'arborescence, ou, à l'inverse, n'utiliser des accumulateurs que pour le niveau 1.

Le processus de correction opère d'une manière statistique : sur un faible nombre d'accès, la correction établie est négligeable. Par contre, grâce au processus d'accumulation établi par classe principale d'information, les erreurs d'évaluation systématiques se traduisent à terme par des corrections significatives, pouvant conduire à une réduction dans un rapport important de l'évaluation établie par le diffuseur pour la classe d'information considérée.

Par ce même principe, des erreurs systématiques de classification sont corrigées par modération du facteur de pertinence rattaché au vecteur de classification.

Les facteurs $P_{ij}$ sont, dans l'exemple, transmis au diffuseur (liaison 62). Ces facteurs $P_{ij}$ constituent un indicateur de qualité sur la précision du classement des informations, et sur les pertinences affectées par chaque équipe de rédacteur de ce diffuseur à chaque élément d'information.

Les coefficients de modulation, ou facteurs modulés, $P_{ij}$ sont utilisés dans le récepteur pour pondérer le degré d'intérêt présenté par chaque catégorie et, donc, pour déterminer les éléments d'information mémorisés et l'ordre de présentation de ces éléments mémorisés.

Pour déterminer les éléments d'information à mémoriser et à présenter, on affecte à chacun de ces éléments un score qui est le produit du facteur de pertinence par le degré d'intérêt de la classe.

Ainsi le score de chaque élément a la valeur S suivante:

$$S=cp.rw_{ijk}$$

où : $cp=p.P_{ij}$

Dans ces formules, cp est le facteur de pertinence corrigé comme décrit ci-dessus et $rw_{ijk}$ est le degré d'intérêt, ou poids relatif, de la classe i,j,k, fourni par l'organe de filtrage contenant le profil de l'utilisateur.

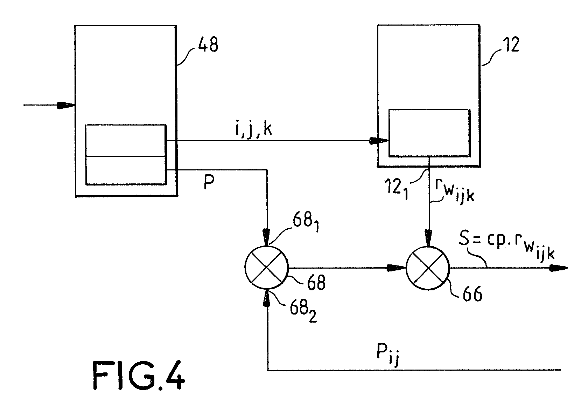

La figure 4 montre une réalisation correspondant à la description ci-dessus:

L'élément diffusé 48 comporte un vecteur i,j,k qui est appliqué à l'organe de filtrage 12 qui fournit sur sa sortie 12 le degré d'intérêt $rw_{ijk}$ qui est appliqué sur la première entrée d'un multiplicateur 66 dont la seconde entrée reçoit la sortie d'un second multiplicateur 68. La première entrée $68_1$ du multiplicateur 68 reçoit le facteur de pertinence p provenant de l'élément diffusé 48 et la seconde entrée $68_2$ du multiplicateur 68 reçoit le coefficient $P_{ij}$ fourni par la sortie du registre $42_{ij}$ (figure 3). Ainsi, la sortie du premier multiplicateur 66 fournit le score S correspondant à la formule ci-dessus.

Les éléments retenus pour être stockés au sein du cache 14, ou présentés spontanément à l'utilisateur lors de la consultation, sont sélectionnés par ordre de score décroissant. Plus la correction de pertinence est significative, plus le score de l'élément est modifié, induisant donc, dans le cas d'une diminution de pertinence un non stockage, ou une non présentation spontanée à l'utilisateur.

**Revendications**

1. Récepteur destiné à recevoir et à présenter de façon sélective des éléments d'information diffusés de manière telle qu'à chaque élément d'information diffusé soient affectés, d'une part, un vecteur représentant la catégorie d'information à laquelle appartient l'élément d'information et, d'autre part, un facteur représentant la pertinence (p) de cet élément dans la catégorie, ce récepteur comportant un moyen de filtrage (12) sélectionnant les éléments d'information à présenter par le récepteur en fonction d'un profil de degrés d'intérêt par catégorie, le facteur de pertinence étant utilisé pour pondérer le degré d'intérêt de l'élément d'information, **caractérisé en ce qu'**il comporte un moyen $(40_{ij})$ de modulation du facteur de pertinence affecté à au moins certaines catégories d'information.

2. Récepteur selon la revendication 1, **caractérisé en ce que** le moyen de modulation du facteur de pertinence comprend un moyen (18) pour effectuer cette modulation en fonction des données relatives aux consultations antérieures d'éléments d'information de la même catégorie.

**3.** Récepteur selon la revendication 2, **caractérisé en ce que** le moyen de modulation du facteur de pertinence est tel que ce facteur est diminué à chaque fois qu'un élément d'information pour la catégorie concernée n'est pas consulté ou consulté de façon partielle.

**4.** Récepteur selon la revendication 3, **caractérisé en ce que** le facteur de diminution est d'autant plus élevé que le facteur de pertinence et/ou le degré d'intérêt est élevé.

**5.** Récepteur selon la revendication 3 ou 4, **caractérisé en ce qu'**il comprend un interface utilisateur (18) comportant une touche d'échappement (24) à la présentation d'un élément d'information et un moyen pour effectuer ladite diminution du facteur de pertinence en fonction de l'actionnement de la touche d'échappement.

**6.** Récepteur selon l'une des revendications 2 à 5, **caractérisé en ce que** le moyen de modulation du facteur de pertinence est tel que ce facteur est augmenté quand l'élément d'information appartenant à la catégorie concernée par ce facteur de pertinence est mis en mémoire (28).

**7.** Récepteur selon l'une quelconque des revendications de 2 à 6, **caractérisé en ce que** les éléments d'information étant affectés d'un niveau de détail, les moyens de modulation sont tels que le facteur de pertinence est augmenté quand l'utilisateur demande un niveau de détail plus élevé (30) pour l'élément d'information consulté dans la catégorie concernée.

**8.** Récepteur selon l'une quelconque des revendications précédentes, **caractérisé en ce que**, les informations étant classées selon des catégories en arborescence allant du général au particulier, on prévoit un moyen de modulation du facteur de pertinence seulement pour la(les) catégorie(s) de niveau(x) le(s) plus élevé(s).

**9.** Récepteur selon l'une quelconque des revendications précédentes, **caractérisé en ce qu'**il comporte un moyen (62) pour émettre vers une station centrale, le coefficient de modulation du facteur de pertinence pour la catégorie concernée par ce facteur de pertinence.

**10.** Application du récepteur selon l'une quelconque des revendications précédentes, à la réception d'information appartenant au groupe comportant : les informations sonores et enregistrements musicaux, les informations et programmes vidéos, les textes, les programmes, les fichiers, les données d'information, les messages diffusés sur les réseaux, les images fixes ou séquences d'images animées, les pages diffusées sur un réseau de type Internet, les catalogues, les informations commerciales, les bulletins, les applications logicielles diffusées, et les jeux diffusés.

# FIG.1

# FIG.2

# FIG.3

FIG.4

**Office européen**
**des brevets**

**RAPPORT DE RECHERCHE EUROPEENNE**

Numéro de la demande

EP 03 29 0268

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | US 6 005 597 A (BARRETT ET AL.) 21 décembre 1999 (1999-12-21) * abrégé; figures 2,3 * * colonne 4, ligne 29 - ligne 65 * * colonne 6, ligne 49 - colonne 7, ligne 49 * * colonne 8, ligne 47 - ligne 55 * * colonne 9, ligne 27 - ligne 42 * --- | 1-3,5,9, 10 | H04N7/173 |
| Y | WO 98 37696 A (HERZ) 27 août 1998 (1998-08-27) * page 12, ligne 14 - ligne 23 * * page 31, ligne 24 - page 32, ligne 15 * * page 35, ligne 17 - ligne 31 * * page 43, ligne 29 - page 45, ligne 11 * --- | 1-3,9,10 | |
| Y | WO 96 17467 A (HERZ ET AL.) 6 juin 1996 (1996-06-06) | 1-3,9,10 | |
| A | * abrégé * * page 18, ligne 20; revendication 41 * * page 25, ligne 12 - ligne 18 * * page 54, ligne 34 - page 56, ligne 23 * --- | 4 | |
| A | WO 02 11445 A (KONINKLIJKE PHILIPS ELECTRONICS) 7 février 2002 (2002-02-07) * abrégé * * page 9, ligne 9 - ligne 23 * --- | 1,3 | DOMAINES TECHNIQUES RECHERCHES (Int.Cl.7) H04N |
| A | WO 01 82599 A (MICROSOFT) 1 novembre 2001 (2001-11-01) * page 10, ligne 9 - ligne 19 * ----- | 6 | |

Le présent rapport a été établi pour toutes les revendications

| Lieu de la recherche | Date d'achèvement de la recherche | Examinateur |
|---|---|---|
| LA HAYE | 22 mai 2003 | Berwitz, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 03 29 0268

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

22-05-2003

| Document brevet cité au rapport de recherche | | Date de publication | Membre(s) de la famille de brevet(s) | | Date de publication |
|---|---|---|---|---|---|
| US 6005597 | A | 21-12-1999 | AUCUN | | |
| WO 9837696 | A | 27-08-1998 | AU | 6175198 A | 09-09-1998 |
| | | | EP | 0962098 A1 | 08-12-1999 |
| | | | JP | 2001513278 T | 28-08-2001 |
| | | | WO | 9837696 A1 | 27-08-1998 |
| WO 9617467 | A | 06-06-1996 | US | 5758257 A | 26-05-1998 |
| | | | AU | 703247 B2 | 25-03-1999 |
| | | | AU | 4410396 A | 19-06-1996 |
| | | | CA | 2207868 A1 | 06-06-1996 |
| | | | EP | 0796538 A2 | 24-09-1997 |
| | | | US | 6020883 A | 01-02-2000 |
| | | | WO | 9617467 A2 | 06-06-1996 |
| | | | US | 2003037041 A1 | 20-02-2003 |
| | | | US | 5734720 A | 31-03-1998 |
| | | | US | 5754938 A | 19-05-1998 |
| | | | US | 5754939 A | 19-05-1998 |
| | | | US | 5835087 A | 10-11-1998 |
| | | | US | 6088722 A | 11-07-2000 |
| | | | US | 6029195 A | 22-02-2000 |
| | | | US | 6460036 B1 | 01-10-2002 |
| WO 0211445 | A | 07-02-2002 | WO | 0211445 A2 | 07-02-2002 |
| WO 0182599 | A | 01-11-2001 | AU | 5383301 A | 07-11-2001 |
| | | | WO | 0182599 A1 | 01-11-2001 |

EPO FORM P0460

Pour tout renseignement concernant cette annexe : voir Journal Officiel de l'Office européen des brevets, No.12/82